# EUROPÄISCHE PATENTSCHRIFT

(11) **EP 3 710 304 B1**
(45) Veröffentlichungstag und Bekanntmachung des Hinweises auf die Patenterteilung: **05.01.2022**
(21) Anmeldenummer: 18799758.0
(22) Anmeldetag: 07.11.2018
(51) Int. Cl.: B60L 3/00, B60L 3/04, H02J 7/00

(54) **KRAFTFAHRZEUG MIT EINEM ENERGIESPEICHER SOWIE VERFAHREN ZUM BETREIBEN EINES KRAFTFAHRZEUGS**
MOTOR VEHICLE COMPRISING AN ENERGY STORE AND METHOD FOR OPERATING A MOTOR VEHICLE
VÉHICULE À MOTEUR COMPRENANT UN RÉSERVOIR D'ÉNERGIE AINSI QUE PROCÉDÉ POUR FAIRE FONCTIONNER D'UN VÉHICULE À MOTEUR

(30) Priorität: 14.11.2017 DE 102017220287
(43) Veröffentlichungstag der Anmeldung: 23.09.2020
(73) Patentinhaber: AUDI AG, 85045 Ingolstadt (DE)
(72) Erfinder: GRASSL, Tobias, 85095 Denkendorf (DE)
(86) Internationale Anmeldenummer: PCT/EP2018/080416
(87) Internationale Veröffentlichungsnummer: WO 2019/096640

(56) Entgegenhaltungen:
- EP-A1- 2 720 342
- WO-A1-2015/071712
- DE-A1-102015 200 124
- US-A1- 2013 249 283

## Beschreibung

Die Erfindung betrifft ein Verfahren zum Betreiben eines Kraftfahrzeugs mit den Merkmalen des Oberbegriffs des Anspruchs 1.

Aus dem Stand der Technik ist beispielsweise die Druckschrift DE 10 2013 219 372 A1 bekannt. Diese betrifft eine tragbare Hochspannungs-Aufladevorrichtung, die dazu ausgelegt ist, eine Traktionsbatterie eines Hybrid-Elektrofahrzeugs steuerbar unter Verwendung von Energie aufzuladen, die von einer Niederspannungs-Blei-Säure-Batterie bereitgestellt wird. Eine Hochspannungs-Aufladevorrichtung kann einen Gleichspannungswandler enthalten, der dazu ausgelegt ist, eine niedrigere Eingangsspannung von der Niederspannungs-Batterie auf eine höhere Ausgangsspannung anzuheben, die für die Hochvolt-Batterie bereitgestellt wird.

Weiterhin ist aus dem Stand der Technik die Druckschrift US 2013/249283 A1 bekannt. Diese beschreibt ein Kraftfahrzeug mit einem Energiespeicher sowie eine externe Ladestation zum Aufladen des Energiespeichers. Die Druckschrift DE 10 2015 010 323 A1 offenbart eine Energiequellenanordnung mit zweipoliger Abschaltung für ein Kraftfahrzeug und die Druckschrift WO 2016/194859 A1 eine Energieumwandlungseinrichtung.

Die Hochspannungs-Aufladevorrichtung kann mit einer Traktionsbatterieverriegelung ausgelegt sein, die das Offline-Aufladen der Traktionsbatterie ermöglicht. In einem Ausführungsbeispiel kann eine Hochspannungs-Aufladevorrichtung dazu ausgelegt sein, mit einem Hochvolt-Batterie-Steuerungsmodul über einen CAN-Bus zu kommunizieren. Die Hochspannungs-Aufladevorrichtung kann dazu ausgelegt sein, für einen vorbestimmten Zeitraum Energie an die Hochvolt-Batterie zu übertragen und dann automatisch den Übertragungsprozess zu stoppen. Die Hochvolt-Aufladevorrichtung kann auch dazu ausgelegt sein, Nutzereingaben zum Starten und/oder Stoppen eines Aufladeprozesses zu empfangen. Zudem kann ein Zusatzaufladegerät vorgesehen sein, um die Niederspannungs-Batteriespannung anzuheben.

Es ist Aufgabe der Erfindung, ein Verfahren zum Betreiben eines Kraftfahrzeugs vorzuschlagen, welches gegenüber anderen Verfahren Vorteile aufweist, insbesondere bei weiterhin hoher funktionaler Flexibilität und hoher Sicherheit einen einfachen Aufbau und damit eine kostengünstige Herstellung des Kraftfahrzeugs ermöglicht.

Dies wird erfindungsgemäß mit einem Kraftfahrzeug mit den Merkmalen des Anspruchs 1 erreicht. Dabei ist vorgesehen, dass der Ladeschaltschütz einphasig ist, sodass der Gleichspannungsladeanschluss permanent mit dem ersten Eingangsanschluss elektrisch verbunden ist, und dass nach dem Anschließen der externen Energiequelle und vor dem Schließen des Ladeschaltschützes mittels des Gleichspannungswandlers ein Potentialausgleich zwischen der externen Energiequelle und dem Kraftfahrzeug durchgeführt wird, indem der Gleichspannungswandler getaktet betrieben wird, wobei der Gleichspannungsladeanschluss einen Schutzleiteranschluss aufweist, der über wenigstens eine Kapazität elektrisch an den zweiten Ausgangsanschluss des Gleichspannungswandlers und über wenigstens eine weitere Kapazität elektrisch an einen Minuspol der Energiequelle angeschlossen ist.

Das Kraftfahrzeug verfügt über den Energiespeicher, mittels welchem elektrische Energie zwischengespeichert werden kann. Die in dem Energiespeicher zwischengespeicherte elektrische Energie dient beispielsweise dem Betreiben einer elektrischen Maschine, insbesondere einer Traktionsmaschine des Kraftfahrzeugs. Die Traktionsmaschine wiederum dient dem Antreiben des Kraftfahrzeugs, insoweit also dem Bereitstellen eines auf das Antreiben des Kraftfahrzeugs gerichteten Drehmoments. Zum Betreiben der elektrischen Maschine beziehungsweise der Traktionsmaschine ist diese elektrisch an den Energiespeicher angeschlossen und zumindest zeitweise elektrisch mit diesem verbunden.

Der Energiespeicher ist mittels extern bereitgestellter Energie aufladbar, welche von der externen Energiequelle bereitgestellt wird. Zum Aufladen wird der Energiespeicher mit der externen Energiewelle elektrisch verbunden, nämlich über den Gleichspannungsladeanschluss. Der Gleichspannungsladeanschluss ist beispielsweise als Steckverbinder ausgestaltet, über welchen der Energiespeicher zeitweise mit der externen Energiequelle elektrisch verbunden werden kann. Der Gleichspannungsladeanschluss ist über den Gleichspannungswandler an den Energiespeicher beziehungsweise dessen elektrische Pole, nämlich dem ersten elektrischen Pol und dem zweiten elektrischen Pol, angeschlossen.

Der Gleichspannungswandler dient einem Umsetzen einer Spannung der elektrischen Energie beziehungsweise des elektrischen Stroms zwischen dem Gleichspannungsladeanschluss und dem Energiespeicher. Dies ist insbesondere dann von Bedeutung, wenn die externe Energiequelle die elektrische Energie nur bei einer Spannung zur Verfügung stellen kann, welche von der Spannung des Energiespeichers abweicht. In diesem Fall wird die von der externen Energiequelle bereitgestellte Spannung auf die Spannung des Energiespeichers gewandelt.

Unter anderem aus Sicherheitsgründen ist es zweckmäßig, den Gleichspannungsladeanschluss elektrisch von dem Energiespeicher zu entkoppeln, solange der Energiespeicher nicht aufgeladen werden soll, der Gleichspannungsladeanschluss also von der externen Energiequelle elektrisch getrennt ist. Beispielsweise können hierzu sowohl der erste elektrische Pol als auch der zweite elektrische Pol des Energiespeichers mittels eines mehrpoligen Ladeschaltschützes elektrisch von dem Gleichspannungsladeanschluss getrennt werden. Hierbei ist der Ladeschaltschütz elektrisch zwischen dem Gleichspannungswandler und dem Gleichspannungsladeanschluss angeordnet.

Die Verwendung eines mehrpoligen Ladeschaltschützes ist jedoch kostenträchtig und bedingt einen großen Bauraum. Aus diesem Grund soll das Trennen des Energiespeichers von dem Gleichspannungsladeanschluss mittels des Gleichspannungswandlers und des Ladeschaltschützes gemeinsam erfolgen. Hierzu ist der Gleichspannungswandler so ausgestaltet, dass in der wenigstens einen Schaltstellung einer der elektrischen Pole, beispielsweise der erste elektrische Pol, von dem Gleichspannungsladeanschluss elektrisch getrennt ist. Der jeweils andere der elektrischen Pole, beispielsweise der zweite elektrische Pol, ist mittels des Ladeschaltschützes elektrisch von dem Gleichspannungsladeanschluss trennbar. Der Ladeschaltschütz ist hierzu einpolig beziehungsweise einphasig ausgebildet, dient also lediglich der Trennung des anderen elektrischen Pols von dem Gleichspannungsladeanschluss.

Bevorzugt weist der erste elektrische Pol ein höheres elektrisches Potential auf als der zweite elektrische Pol. So kann es beispielsweise vorgesehen sein, dass die Spannung zwischen dem ersten elektrischen Pol und einer elektrischen Masse positiv ist, wohingegen die Spannung zwischen dem zweiten elektrischen Pol und der Masse negativ ist. Selbstverständlich kann es jedoch auch vorgesehen sein, dass der zweite elektrische Pol als elektrische Masse vorliegt, also ein Potential von Null aufweist.

In einer Ladebetriebsart des Kraftfahrzeugs ist es vorgesehen, dass der Ladeschaltschütz geschlossen ist, sodass der jeweils andere elektrische Pol mit dem Gleichspannungswandler und folglich mit dem zweiten elektrischen Pol elektrisch verbunden ist. Zudem wird der Gleichspannungswandler derart betrieben, dass auch der eine elektrische Pol zumindest zeitweise mit dem Gleichspannungsladeanschluss verbunden ist, beispielsweise unter Umsetzung der Spannung. In einer zweiten Betriebsart ist hingegen der Ladeschaltschütz geöffnet, sodass zumindest der jeweils andere elektrische Pol elektrisch vollständig von dem Gleichspannungsladeanschluss entkoppelt beziehungsweise getrennt ist. Zudem wird der Gleichspannungswandler derart angesteuert, dass auch der eine elektrische Pol von dem Energiespeicher getrennt ist, wenngleich der Gleichspannungswandler permanent zumindest einpolig mit dem Gleichspannungsladeanschluss elektrisch verbunden ist.

Die Verwendung des einpoligen Ladeschaltschützes nur für denjenigen der elektrischen Pole, welcher nicht mittels des Gleichspannungswandlers von dem Gleichspannungsladeanschluss entkoppelt werden kann, hat den Vorteil, dass weniger Bauraum benötigt wird und zudem eine einfachere Verkabelung realisiert sein kann. Der Gleichspannungswandler verfügt bevorzugt über wenigstens einen Schalter, insbesondere einen Halbleiterschalter, der in unterschiedlichen Schaltstellungen vorliegen kann. Zudem weist der Gleichspannungswandler bevorzugt eine Speicherkapazität und/oder einen Speicherkondensator auf.

Der Gleichspannungswandler kann grundsätzlich beliebig ausgestaltet sein. Beispielsweise liegt er in Form einer Ladungspumpe, eines Aufwärtswandlers, eines Inverswandlers, eines Synchronwandlers oder dergleichen vor. Von Bedeutung ist lediglich, dass der Gleichspannungswandler derart angesteuert werden kann, dass der eine der elektrischen Pole von dem Gleichspannungsladeanschluss getrennt ist. Hierzu wird der Gleichspannungswandler in die wenigstens eine Schaltstellung verbracht beziehungsweise die wenigstens eine Schaltstellung an dem Gleichspannungswandler eingestellt.

Gemäß der Erfindung ist vorgesehen, dass der Gleichspannungswandler einen an einen ersten Ladeanschluss des Gleichspannungsladeanschlusses angeschlossenen Eingangsanschluss, einen an einen zweiten Ladeanschluss des Gleichspannungsladeanschlusses angeschlossenen zweiten Eingangsanschluss, einen an den ersten elektrische Pol angeschlossenen ersten Ausgangsanschluss und einen an den zweiten elektrischen Pol angeschlossenen zweiten Ausgangsanschluss aufweist. Insgesamt verfügt der Gleichspannungswandler also über zwei Eingangsanschlüsse und zwei Ausgangsanschlüsse. Besonders bevorzugt sind genau zwei Eingangsanschlüsse und zwei Ausgangsanschlüsse realisiert, sodass der Gleichspannungswandler als zweiphasiger Gleichspannungswandler vorliegt. Der Gleichspannungswandler liegt bevorzugt als vollständig gekapseltes Element vor, welches elektrisch zwischen dem Energiespeicher und dem Gleichspannungsladeanschluss angeschlossen ist. Hierdurch wird eine einfache Austauschbarkeit sichergestellt.

Gemäß der Erfindung ist vorgesehen, dass der erste Eingangsanschluss mittels wenigstens eines Schalters des Gleichspannungswandlers elektrisch von dem ersten Ausgangsanschluss trennbar ist, wobei der zweite Eingangsanschluss elektrisch permanent mit dem zweiten Ausgangsanschluss verbunden ist, wobei der Gleichspannungsladeanschluss über den ersten Eingangsanschluss und den ersten Ausgangsanschluss an den ersten elektrischen Pol und über den zweiten Eingangsanschluss und den zweiten Ausgangsanschluss an den zweiten elektrischen Pol angeschlossen ist. Vorstehend wurde darauf hingewiesen, dass der Gleichspannungswandler über den wenigstens einen Schalter verfügt, grundsätzlich jedoch beliebig ausgestaltet sein kann.

Der Schalter liegt elektrisch zwischen dem ersten Eingangsanschluss und dem ersten Ausgangsanschluss derart vor, dass bei geöffnetem Schalter der erste Eingangsanschluss von dem ersten Ausgangsanschluss getrennt ist. Verfügt der Gleichspannungswandler über mehrere Schalter, so kann es notwendig sein, mehrere oder alle der Schalter jeweils in eine Schaltstellung zu bringen, in welcher der erste Eingangsanschluss elektrisch von dem ersten Ausgangsanschluss getrennt ist. Bevorzugt ist der erste Ausgangsanschluss mittels des wenigstens einen Schalters beziehungsweise den mehreren Schaltern zudem elektrisch von dem zweiten Ausgangsanschluss trennbar. Selbstverständlich kann es auch vorgesehen sein, dass der zweite Ausgangsanschluss ohnehin permanent elektrisch von dem ersten Eingangsanschluss getrennt ist.

Der zweite Eingangsanschluss des Gleichspannungswandlers ist elektrisch permanent mit dem zweiten Ausgangsanschluss verbunden. Aus diesem Grund ist der Ladeschaltschütz elektrisch zwischen dem zweiten Eingangsanschluss und dem Gleichspannungsladeanschluss angeordnet, um auch den zweiten elektrischen Pol zuverlässig von dem Gleichspannungsladeanschluss trennen zu können. Hierzu ist der Gleichspannungswandler elektrisch entsprechend verschaltet.

Weiterhin sieht die Erfindung vor, dass der Ladeschaltschütz einphasig ist, sodass der Gleichspannungsladeanschluss permanent mit dem ersten Eingangsanschluss elektrisch verbunden ist. Hierauf wurde vorstehend bereits hingewiesen. Die Verwendung des einphasigen Ladeschaltschützes ermöglicht eine kompakte Ausgestaltung. Weil zugleich der Gleichspannungswandler zur elektrischen Trennung des zweiten Eingangsanschlusses von dem Gleichspannungsladeanschluss verwendet werden kann, ist der Energiespeicher zuverlässig von dem Gleichspannungsladeanschluss elektrisch entkoppelbar.

Eine weitere Ausführungsform der Erfindung sieht vor, dass der Gleichspannungswandler bidirektional ist. Die Verwendung des bidirektionalen Gleichspannungswandlers ermöglicht sowohl das Laden des Energiespeichers mit der externen Energiequelle entnommener elektrischer Energie als auch das Zurückspeisen von elektrischer Energie aus dem Energiespeicher zu der externen Energiequelle. Der Gleichspannungswandler ist bei einer derartigen Ausgestaltung also äußerst flexibel einsetzbar.

Eine bevorzugte weitere Ausgestaltung der Erfindung sieht vor, dass der Energiespeicher über einen Batterieschaltschütz an den Gleichspannungswandler angeschlossen ist, mittels welchem der erste elektrische Pol und der zweite elektrische Pol gemeinsam elektrisch von dem Gleichspannungswandler trennbar sind. Es ist also nicht nur vorgesehen, den Energiespeicher mittels des Gleichspannungswandlers und des Ladeschaltschützes von dem Gleichspannungsladeanschluss elektrisch zu entkoppeln.

Zusätzlich ist es vorteilhaft, den Energiespeicher von dem Gleichspannungswandler elektrisch trennen zu können. Aus diesem Grund ist zwischen dem Energiespeicher und dem Gleichspannungswandler der Batterieschaltschütz angeordnet, welcher mehrphasig, insbesondere zweiphasig ist, sodass die beiden elektrischen Pole des Energiespeichers gemeinsam und gleichzeitig von dem Gleichspannungswandler getrennt werden können. Durch das zusätzliche Vorsehen des Batterieschaltschützes wird ein besonders hoher Sicherheitsgrad erreicht.

Die Erfindung sieht weiterhin vor, dass der Gleichspannungsladeanschluss einen Schutzleiteranschluss aufweist, der über wenigstens eine Kapazität elektrisch an den Gleichspannungswandler angeschlossen ist. Der Gleichspannungsladeanschluss verfügt insoweit nicht nur über Phasenanschlüsse für den ersten elektrischen Pol und den zweiten elektrischen Pol des Energiespeichers, sondern zusätzlich über den Schutzleiteranschluss. Unter den Phasenanschlüssen sind der erste Ladeanschluss und der zweite Ladeanschluss zu verstehen. Der Schutzleiteranschluss ist vorzugsweise zumindest seitens des Kraftfahrzeugs mit einem elektrischen Bezugspotential, insbesondere einer elektrischen Masse, beispielsweise einer Karosserie des Kraftfahrzeugs, elektrisch verbunden. Zusätzlich kann dies auch auf Seiten der externen Energiequelle vorgesehen sein. Durch die Verwendung des Schutzleitanschlusses sind Fehlerströme einfach feststellbar, was zu einer hohen Sicherheit führt.

Schließlich kann eine weitere Ausgestaltung der Erfindung vorsehen, dass mittels des Gleichspannungswandlers ein Potentialausgleich durchgeführt wird. Der Potentialausgleich wird durchgeführt, nachdem die externe Energiequelle über den Gleichspannungsladeanschluss angeschlossen wurde, jedoch vor einem Schließen des Ladeschaltschützes. Beispielsweise wird der Gleichspannungswandler zum Potentialausgleich getaktet beziehungsweise gepulst betrieben. Ist der Potentialausgleich erzielt, so wird der Ladeschaltschütz geschlossen und der Gleichspannungswandler - in Abhängigkeit von der von der externen Energiequelle bereitgestellten elektrischen Spannung - getaktet beziehungsweise gepulst oder im Konstantbetrieb betrieben. Die Verwendung des Gleichspannungswandlers für den Potentialausgleich hat den Vorteil, dass mit ohnehin bereits vorhandenen Mitteln, also ohne eine zusätzliche Einrichtung, ein hohes Sicherheitsniveau realisiert wird, indem die Potentiale der externen Energiequelle und des Kraftfahrzeugs aneinander angeglichen werden, bevor das Laden des Energiespeichers mit elektrischer Energie beginnt.

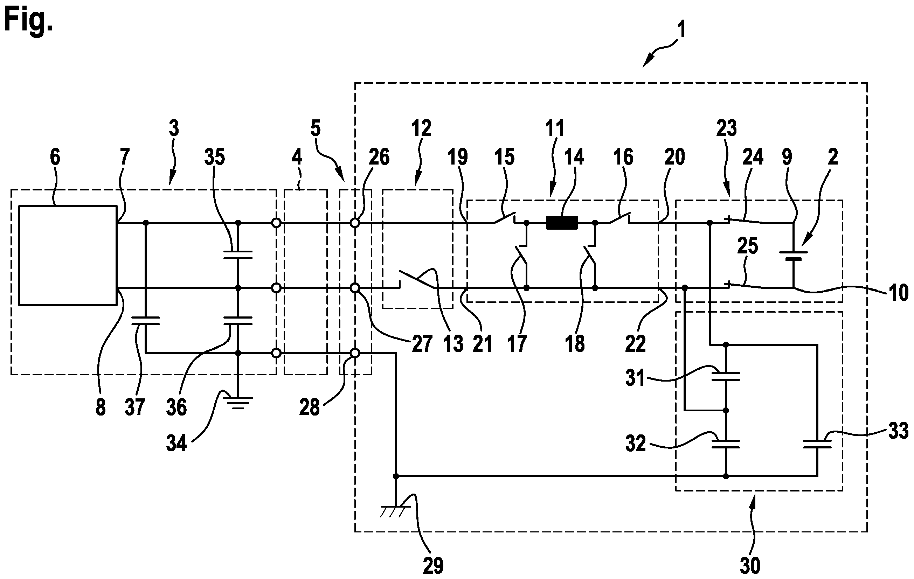

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung einer Anordnung aus einem Kraftfahrzeug und einer externen Energiequelle.

Die Figur zeigt eine schematische Darstellung eines Kraftfahrzeugs 1, das einen Energiespeicher 2 zur Zwischenspeicherung elektrischer Energie aufweist. Der Energiespeicher 2 ist bevorzugt als Batterie, insbesondere als Hochvoltbatterie, ausgestaltet. Der Energiespeicher 2 ist mit elektrischer Energie aufladbar, die von einer externen Energiequelle 3 bereitgestellt wird. Die Energiequelle 3 ist über eine elektrische Leitung 4, die ebenfalls nur schematisch angedeutet ist, an einen Gleichspannungsladeanschluss 5 des Kraftfahrzeugs 1 angeschlossen. Die Energiewelle 3 verfügt beispielsweise über eine Spannungsquelle 6, welche an zwei elektrischen Polen 7 und 8 eine elektrische Spannung zur Verfügung stellt.

Der Energiespeicher 2 weist einen ersten elektrischen Pol 9 und einen zweiten elektrischen Pol 10 auf, wobei der erste Pol 9 beispielsweise einen Pluspol und der zweite Pol 10 einen Minuspol darstellt. Der Energiespeicher 2 beziehungsweise seine Pole 9 und 10 sind über einen Gleichspannungswandler 11 an den Gleichspannungsladeanschluss 5 angeschlossen. Der Gleichspannungswandler 11 wiederum ist über einen Ladeschaltschütz 12 an den Gleichspannungsladeanschluss 5 angeschlossen. Der Ladeschaltschutz 12 dient dem zumindest zeitweise Entkoppeln wenigstens eines Pols 9 und 10 von dem Gleichspannungsladeanschluss 5.

In dem hier dargestellten Ausführungsbeispiel 11 ist der Gleichspannungswandler 11 derart ausgestaltet, dass mittels ihm einer der elektrischen Pole 9 und 10, konkret der erste Pol 9, elektrisch von dem Gleichspannungsladeanschluss 5 getrennt werden kann. Der jeweils andere der Pole 9 und 10, in dem hier dargestellten Ausführungsbeispiel der zweite Pol 10, ist hingegen mittels des Ladeschaltschützes 12 von dem Gleichspannungsladeanschluss 5 trennbar. Der Ladeschaltschutz 12 ist einphasig ausgestaltet und verfügt insoweit über einen einzigen Schalter 13, der elektrisch zwischen dem zweiten Pol 10 und dem Gleichspannungsladeanschluss 5 vorliegt.

Der Gleichspannungswandler 11 weist in dem dargestellten Ausführungsbeispiel eine Induktivität 14, also beispielsweise eine Spule beziehungsweise eine Drossel, sowie Schalter 15, 16, 17 und 18 auf. Die Schalter 15 und 16 sind mit der Induktivität 14 in Reihe geschaltet, nämlich zwischen einem ersten Eingangsanschluss 19 und einem ersten Ausgangsanschluss 20 des Gleichspannungswandlers 11. Hierbei sind die Schalter 15 und 16 auf gegenüberliegenden Seiten der Induktivität 14 angeordnet. In anderen Worten ist der Schalter 15 elektrisch zwischen dem ersten Eingangsanschluss 19 und der Induktivität 14 und der Schalter 16 elektrisch zwischen der Induktivität 14 und dem ersten Ausgangsanschluss 20 vorgesehen.

Zusätzlich zu den beiden Anschlüssen 19 und 20 verfügt der Gleichspannungswandler 11 über einen zweiten Eingangsanschluss 21 und einen zweiten Ausgangsanschluss 22. Diese sind innerhalb des Gleichspannungswandlers 11 permanent elektrisch miteinander verbunden. Die beiden Schalter 17 und 18 sind einerseits auf gegenüberliegenden Seiten der Induktivität 14 angeschlossen. Andererseits sind die beiden Schalter 17 und 18 an den zweiten Eingangsanschluss 21 und den zweiten Ausgangsanschluss 22 angeschlossen.

Es ist deutlich zu erkennen, dass der erste Eingangsanschluss 19 permanent mit dem Gleichspannungsladeanschluss 5 elektrisch verbunden ist, wohingegen der zweite Eingangsanschluss 21 über den Schalter 13 beziehungsweise den Ladeschaltschutz 12 an den Gleichspannungsladeanschluss 5 angeschlossen ist. Die elektrische Verbindung zwischen dem Gleichspannungsladeanschluss 5 und dem zweiten Eingangsanschluss 21 ist insoweit mittels des Ladeschaltschützes 12 unterbrechbar.

Der erste Ausgangsanschluss 20 und der zweite Ausgangsanschluss 22 sind an den Energiespeicher 2 angeschlossen, nämlich der erste Ausgangsanschluss 20 an den ersten Pol 9 und der zweite Ausgangsanschluss 22 an den zweiten Pol 10. In dem hier dargestellten Ausführungsbeispiel ist elektrisch zwischen dem Gleichspannungswandler 11 und dem Energiespeicher 2 ein Batterieschaltschütz 23 angeschlossen, welcher mehrphasig ist. Entsprechend verfügt der Batterieschaltschütz 23 über Schalter 24 und 25, welche gleichzeitig betätigt werden, also entweder beide offen oder beide geschlossen sind. Der Schalter 24 liegt zwischen dem ersten Pol 9 und dem ersten Ausgangsanschluss 20 und der Schalter 25 zwischen dem zweiten Pol 10 und dem zweiten Ausgangsanschluss 22 vor.

Es ist zu erkennen, dass der Gleichspannungsladeanschluss 5 zwei Phasenanschlüsse 26 und 27 und zusätzlich einen Schutzleiteranschluss 28 aufweist. Über die Phasenanschlüsse 26 und 27 sind die beiden Pole 9 und 10 mit der Energiequelle 3 elektrisch verbindbar. Der Schutzleiteranschluss 28 hingegen ist kraftfahrzeugseitig mit einem Vergleichspotential 29 verbunden, welches beispielsweise in Form einer Karosserie des Kraftfahrzeugs 1 vorliegt.

Zusätzlich ist der Schutzleiteranschluss 28 über wenigstens eine elektrische Komponente 30, die hier durch Ersatzkapazitäten 31, 32 und 33 angedeutet ist, mit dem Energiespeicher 2 verbindbar. Es wird deutlich, dass der Schutzleiteranspruch 28 über die Komponente 30 elektrisch zwischen dem Gleichspannungswandler 11 und dem Batterieschaltschütz 23 angeschlossen ist, sodass auch die Komponente 30 mittels des Batterieschaltschützes 23 von dem Energiespeicher 2 elektrisch entkoppelbar ist.

Seitens der Energiequelle 3 ist der Schutzleiteranschluss 28 ebenfalls mit einem Vergleichspotential 34 sowie Ersatzkapazitäten 35, 36 und 37 elektrisch verbunden. Selbstverständlich können die Ersatzkapazitäten 31, 32 und 33 und/oder die Ersatzkapazitäten 35, 36 und 37 tatsächlich in der dargestellten Form vorliegen, beispielsweise zur Realisierung einer Entstörschaltung.

Das hier dargestellte Kraftfahrzeug 1 beziehungsweise die dargestellte Anordnung aus Kraftfahrzeug 1 und Energiequelle 3 hat den Vorteil, dass mit geringem schaltungstechnischen Aufwand und lediglich geringen Bauraumanforderungen eine vollständige elektrische Trennung des Energiespeichers 2 von dem Gleichspannungsladeanschluss 5 erzielt werden kann. Hierbei wird der erste elektrische Pol 9 mittels des Gleichspannungswandlers 11 und der zweite elektrische Pol 10 mittels des Ladeschaltschützes 12 beziehungsweise des Schalters 13 von dem Gleichspannungsladeanschluss 5 elektrisch entkoppelt.

## Patentansprüche

1. Verfahren zum Betreiben eines Kraftfahrzeugs (1) mit einem Energiespeicher (2) zur Zwischenspeicherung elektrischer Energie, wobei ein als Pluspol vorliegender erster elektrischer Pol (9) und ein als Minuspol vorliegender zweiter elektrischer Pol (10) des Energiespeichers (2) elektrisch über einen Gleichspannungswandler (11) an einen Gleichspannungsladeanschluss (5) des Kraftfahrzeugs (1) angeschlossen sind, über den der Energiespeicher (2) zum Aufladen mit einer externen Energiequelle (3) elektrisch verbindbar ist, wobei der Gleichspannungswandler (11) einen an einen ersten Ladeanschluss des Gleichspannungsladeanschlusses (5) angeschlossenen ersten Eingangsanschluss (19), einen an einen zweiten Ladeanschluss des Gleichspannungsladeanschlusses (5) angeschlossenen zweiten Eingangsanschluss (21), einen an den ersten elektrischen Pol (9) angeschlossenen ersten Ausgangsanschluss (20) und einen an den zweiten elektrischen Pol (10) angeschlossenen zweiten Ausgangsanschluss (22) aufweist, wobei der Gleichspannungsladeanschluss (5) über den ersten Eingangsanschluss (19) und den ersten Ausgangsanschluss (20) an den ersten elektrischen Pol (9) und über den zweiten Eingangsanschluss (21) und den zweiten Ausgangsanschluss (22) an den zweiten elektrischen Pol (10) angeschlossen ist, und wobei der erste Eingangsanschluss (19) mittels wenigstens eines Schalters (15,16,17,18) des Gleichspannungswandlers (11) elektrisch von dem ersten Ausgangsanschluss (20) trennbar ist, so dass in wenigstens einer Schaltstellung des Gleichspannungswandlers (11) der erste elektrische Pol (9) von dem Gleichspannungsladeanschluss (5) elektrisch getrennt ist, wobei der zweite Eingangsanschluss (21) elektrisch permanent mit dem zweiten Ausgangsanschluss (22) verbunden ist, wobei der zweite elektrische Pol (10) mittels eines elektrisch zwischen dem Gleichspannungswandler (11) und dem Gleichspannungsladeanschluss (5) angeschlossenen Ladeschaltschützes (12) elektrisch von dem Gleichspannungsladeanschluss (5) trennbar ist, **dadurch gekennzeichnet, dass** der Ladeschaltschütz (12) einphasig ist, sodass der Gleichspannungsladeanschluss (5) permanent mit dem ersten Eingangsanschluss (19) elektrisch verbunden ist, und dass nach dem Anschließen der externen Energiequelle (3) und vor dem Schließen des Ladeschaltschützes (12) mittels des Gleichspannungswandlers (11) ein Potentialausgleich zwischen der externen Energiequelle (3) und dem Kraftfahrzeug (1) durchgeführt wird, indem der Gleichspannungswandler (11) getaktet betrieben wird, wobei der Gleichspannungsladeanschluss (5) einen Schutzleiteranschluss (28) aufweist, der über wenigstens eine Kapazität (31,32,33) elektrisch an den zweiten Ausgangsanschluss (22) des Gleichspannungswandlers (11) und über wenigstens eine weitere Kapazität (35,36,37) elektrisch an einen Minuspol (8) der Energiequelle (3) angeschlossen ist.

2. Verfahren nach Anspruch 1, **dadurch gekennzeichnet, dass** der Gleichspannungswandler (11) bidirektional ist.

3. Verfahren nach einem der vorhergehenden Ansprüche, **dadurch gekennzeichnet, dass** der Energiespeicher (2) über einen Batterieschaltschütz (23) an den Gleichspannungswandler (11) angeschlossen ist, mittels welchem der erste elektrische Pol (9) und der zweite elektrische Pol (10) gemeinsam elektrisch von dem Gleichspannungswandler (11) getrennt werden können.

## Claims

1. Method for operating a motor vehicle (1) having an energy store (2) for the intermediate storage of electrical energy, wherein a first electrical pole (9), which is present as a positive pole, and a second electrical pole (10), which is present as a negative pole, of the energy store (2) are electrically connected via a DC/DC converter (11) to a DC charging connection (5) of the motor vehicle (1), via which the energy store (2) can be electrically connected to an external energy source (3) for charging, wherein the DC/DC converter (11) has a first input connection (19) connected to a first charging connection of the DC charging connection (5), a second input connection (21) connected to a second charging connection of the DC charging connection (5), a first output connection (20) connected to the first electrical pole (9) and a second output connection (22) connected to the second electrical pole (10), wherein the DC charging connection (5) is connected via the first input connection (19) and the first output connection (20) to the first electrical pole (9) and via the second input connection (21) and the second output connection (22) to the second electrical pole (10), and wherein the first input connection (19) can be electrically disconnected from the first output connection (20) by means of at least one switch (15, 16, 17, 18) of the DC/DC converter (11), so that, in at least one switching position of the DC/DC converter (11), the first electrical pole (9) is electrically disconnected from the DC charging connection (5), wherein the second input connection (21) is permanently electrically connected to the second output connection (22), wherein the second electrical pole (10) can be electrically disconnected from the DC charging connection (5) by means of a charging contactor (12) electrically connected between the DC/DC converter (11) and the DC charging connection (5), **characterised in that** the charging contactor (12) is single-phase so that the DC charging connection (5) is permanently electrically connected to the first input connection (19), and **in that**, after the connection of the external energy source (3) and before the closing of the charging contactor (12), potential equalisation is carried out between the external energy source (3) and the motor vehicle (1) by means of the DC/DC converter (11) by operating the DC/DC converter (11) in a clocked manner, wherein the DC charging connection (5) has a protective conductor connection (28) which is electrically connected to the second output connection (22) of the DC/DC converter (11) via at least one capacitance (31, 32, 33) and is electrically connected to a negative pole (8) of the energy source (3) via at least one further capacitance (35, 36, 37).

2. Method according to claim 1, **characterised in that** the DC/DC converter (11) is bidirectional.

3. Method according to any one of the preceding claims, **characterised in that** the energy store (2) is connected to the DC/DC converter (11) via a battery contactor (23) by means of which the first electrical pole (9) and the second electrical pole (10) can together be electrically disconnected from the DC/DC converter (11).

## Revendications

1. Procédé de fonctionnement d'un véhicule automobile (1) avec un accumulateur d'énergie (2) pour le stockage intermédiaire de l'énergie électrique, dans lequel un premier pôle électrique (9) présent comme pôle positif et un second pôle électrique (10) présent comme pôle négatif de l'accumulateur d'énergie (2) sont électriquement raccordés par le biais d'un convertisseur continu-continu (11) à un raccord de charge de tension continue (5) du véhicule automobile (1), par le biais duquel l'accumulateur d'énergie (2) peut être relié par voie électrique pour la charge à une source d'énergie externe (3), dans lequel le convertisseur continu-continu (11) présente un premier raccord d'entrée (19) raccordé à un premier raccord de charge du raccord de charge de tension continue (5), un second raccord d'entrée (21) raccordé à un second raccord de charge du raccord de charge de tension continue (5), un premier raccord de sortie (20) raccordé au premier pôle électrique (9) et un second raccord de sortie (22) raccordé au second pôle électrique (10), dans lequel le raccord de charge de tension continue (5) est raccordé par le biais du premier raccord d'entrée (19) et du premier raccord de sortie (20) au premier pôle électrique (9) et par le biais du second raccord d'entrée (21) et du second raccord de sortie (22) au second pôle électrique (10), et dans lequel le premier raccord d'énergie (19) peut être électriquement séparé du premier raccord de sortie (20) au moyen d'au moins un commutateur (15, 16, 17, 18) du convertisseur continu-continu (11) de sorte que dans au moins une position de commutation du convertisseur continu-continu (11) le premier pôle électrique (9) soit électriquement séparé du raccord de charge de tension continue (5), dans lequel le second raccord d'entrée (21) est électriquement relié en permanence au second raccord de sortie (22), dans lequel le second pôle électrique (10) peut être électriquement séparé du raccord de charge de tension continu (5) au moyen d'un contacteur-disjoncteur de charge (12) raccordé électriquement entre le convertisseur continu-continu (11) et le raccord de charge de tension continue (5), **caractérisé en ce que** le contacteur-disjoncteur de charge (12) est monophasé de sorte que le raccord de charge de tension continue (5) soit électriquement relié en permanence au premier raccord d'entrée (19), et qu'après le raccordement de la source d'énergie externe (3) et avant la fermeture du contacteur-disjoncteur de charge (12) au moyen du convertisseur continu-continu (11) une compensation de potentiel soit réalisée entre la source d'énergie externe (3) et le véhicule automobile (1) **en ce que** le convertisseur continu-continu (11) est actionné en cadence, dans lequel le raccord de charge de tension continue (5) présente un raccord de conducteur de protection (28) qui est raccordé par le biais d'au moins une capacité (31, 32, 33) électriquement au second raccord de sortie (22) du convertisseur continu-continu (11) et par le biais d'au moins une autre capacité (35, 36, 37) électriquement à un pôle négatif (8) de la source d'énergie (3).

2. Procédé selon la revendication 1, **caractérisé en ce que** le convertisseur continu-continu (11) est bidirectionnel.

3. Procédé selon l'une quelconque des revendications précédentes, **caractérisé en ce que** l'accumulateur d'énergie (2) est raccordé par le biais d'un disjoncteur de batterie (23) au convertisseur continu-continu (11), au moyen duquel le premier pôle électrique (9) et le second pôle électrique (10) peuvent être séparés ensemble électriquement du convertisseur continu-continu (11).
